# EUROPEAN PATENT APPLICATION

(11) **EP 1 721 657 A1**
(43) Date of publication of application: **15.11.2006**
(21) Application number: 05010486.8
(22) Date of filing: 13.05.2005
(51) Int. Cl.: B01D 69/10, B01D 67/00

(54) **A method of fabricating a polymeric membrane having at least one pore**

(71) Applicant: SONY DEUTSCHLAND GmbH, 50829 Köln (DE)
(72) Inventor: Harnack, Oliver, Sony Deutschland GmbH, 70327 Stuttgart (DE); Yasuda, Akio, Sony Deutschland GmbH, 70327 Stuttgart (DE)
(74) Representative: Appelt, Christian W.

(57) **Abstract**

The present invention relates to a method of fabricating a polymer membrane having at least one pore, to polymeric membranes fabricated by such method, and to uses of such polymeric membranes. The pores thus formed are in the nanometer range and therefore make such porous membranes amenable for use in devices for single molecule detection.

## Description

The present invention relates to a method of fabricating a polymer membrane having at least one pore, to polymeric membranes fabricated by such method, and to uses of such polymeric membranes. The pores thus formed are in the nanometer range and therefore make such porous membranes amenable for use in devices for single molecule detection.

Reasons for an increasing interest in artificial membranes with incorporated nanopores with diameters in the range of 1.5-100 nm are potential applications in the area of single molecule detection. Recently, studies of direct DNA sequencing methods concentrated onto using a single pore - mainly biological pores in form of membrane proteins - for detecting the translocation event of DNA molecules through such a local constriction. The target DNA molecules to be analysed were driven by a DC field, and the presence of DNA inside the pore can be detected by a partial blocking of the ionic current that flows through the pore. The idea of not only detecting the presence of target DNA in the pore, but also the detection of the base sequence (=direct sequencing) at relatively high speed exceeding 1 base pair reading per ms was stated several years ago.ⁱ However, it was clear that extremely high-resolution measurement techniques would be required. Up to date, direct sequencing at single base resolution level was not yet achieved.

In the earliest work in 1996 J. J. Kasianowicz et al. showed that DNA molecules can be detected during their translocation through membrane channels which are formed by an alpha-hemolysin pore protein.ⁱ They reported on the characterization of individual polynucleotide molecules using a 2.6 nm membrane channel. They demonstrated that the blockade lifetime of the ionic current could be utilised to derive the molecule length.

Akeson et al. demonstrated discrimination of polyC and poly A segments within a single RNA molecule by using an alpha-hemolysin channel.^{ii iii}

Later, Meller et al. reported successful discrimination of polynucleotides of the same length that only differed in their sequence. In their work also an alpha-hemolysin channel and unlabeled DNA molecules were used.^{iv} However, a direct read-out of the sequence was not possible.

Howorka et al. reported on target DNA detection through an alpha-hemolysin nanopore at single-base resolution by covalently modifying the nanopore with a single stranded DNA molecule (probe DNA = DNA molecule which senses the target DNA molecule).^{v} The target DNA that was transported through the nanopore interacted with the tethered strand in different way, depending on whether a complete mismatch, a partial match or a complete match was present. The interacting was resolved at the time scale by measuring the ionic blocking current.

A different approach which uses hairpin DNA molecules was published by Vercoutere et al.^{vi} The specific form of hairpin DNA and the resulting ionic current signature was utilised to rapidly discriminate at single-nucleotide resolution. The fact that the hairpin DNA could not pass the nanopore at once, but after the hydrogen bonds between bases were dissociated, slowed down the translocation velocity of the DNA molecule through the pore, making electrical reading easier.
With the advancing nanotechnology, recently also nanopore sequencing concepts based on artificial nanopores came up. The majority of artificial inorganic membranes that embed the nanopore are based on thin SiO₂ or Si₃N₄ layers, known from various applications in the area of micro engineered mechanical systems (MEMS).

Li et al. published data about nanopores that were fabricated into silicon nitride membranes by using ion beam etching.^{vii} A pre-defined cavity (made by either wet-chemical etching methods or focussed ion beam (FIB) etching) was un-covered by applying a focussed Ar-ion beam, which removes material layer by layer (ion sculpting). Finally, the cavity broke through which resulted in a nanopore within the thin membrane. The size adjustment was achieved by using a feedback loop in form of an ion detector that was located behind the etched membrane: as soon as the nanopore opens up, ions were detected on the backside and the sculpting process was stopped. They showed that the pore diameter could be further controlled by adjusting the ion dose of the sculpting process and the background temperature: even after opening the pore, the pore diameter could be reduced by ion-induced material transport towards the pore.^{viii} They demonstrated the fabrication of 3-5 nm pores. Using these single nanopores 500 to 10k base DNA molecules could be detected in solution.^{ix}

More recently, artificial pores of diameters down to 3 nm were fabricated in a SiO₂ membrane by utilising electron beam lithography, wet chemical etching and a high energy, focussed electron beam for pore diameter reduction.^{x} Storm et al. reported that the high-energy electron beam of a transmission electron microscope can be utilized to shrink the size of a fabricated nanopore through fluidization of the SiO₂ surface. A resulting increase in surface tension leads to a decrease of pore size. This method of diameter-control basically relies on the visual feedback through the TEM.

Another approach for controlled diameter reduction that was reported recently is the deposition of thin layers of Al₂O₃ by using atomic layer deposition techniques.^{xi} FIB-fabricated nanopores in Si₃N₄ membranes with an initial diameter of about 20 nm had been shrunk to almost 2nm by depositing atomic layers of Al₂O₃. At the same time, the thickness of the membrane increases because the material is deposited isotropically. Another important aspect of this method is that surface defects that were introduced by the FIB process could be covered by the Al₂O₃ layer. A clear reduction of 1/f noise could be observed. Also, the surface charge of Al₂O₃ is different from that of the negatively charged SiO₂ and Si₃N₄ surfaces in KCl buffers: Al₂O₃ has its isoelectric point at pH~9 and therefore, at pH~8 DNA should be not repelled from the surface.^{xi}

In contrast to these oxide-based membranes, membranes based on polymer materials were studied as well. Nanopores were for example introduced by shooting high-energy ions through foils of poly(ethylene terephthalate).^{xii} The required accelerator technology makes this approach less attractive.

Saleh et al. report on successful DNA detection by using an artificial, PDMS based nanopore.^{xiii} Because of the relatively large dimensions of their pore of the order of 200 nm in width and more than a µm in length, no high-resolution detection could be achieved.

So far there does not exist a simple fabrication method for polymeric membranes having pores in the nanometer range. The artificial membranes known from the prior art which are based on oxide materials like SiO₂ and Si₃N₄ require a number of lithographic steps and processing steps. Furthermore, the adjustment of the pore size of such artificial membranes appears to be rather complicated. Moreover, artificial membranes based on oxide materials having pores which were fabricated by using focussed ion beams can suffer from elevated 1/f noise levels because of the presence of introduced defects and trap centres. Additionally, membranes based on oxide materials like SiO₂ are negatively charged in buffer solution which makes such membranes unsuitable for use in the detection of negatively charged biopolymers like nucleic acids.

Accordingly, it was an object of the present invention to provide for a method of fabrication of a membrane having pores with a diameter in the nanometer range, which method is easy to perform. Furthermore it was an object of the present invention to provide for a method that allows the fabrication of membranes with pores wherein the formation of the pores can be easily monitored. Moreover, it was an object of the present invention to provide for a method of fabrication of membranes having pores in the nanometer range, wherein the size of the pores can be easily adjusted. It was furthermore an object of the present invention to provide a fabrication method of membranes having pores in the nanometer range that is simple and does not produce negatively charged membranes when placed into buffer solution. It was also an object of the present invention to provide for a method of fabrication of membranes having pores in the nanometer range wherein no harsh etching steps and subsequently the application of masks that withstand such etching steps, are required.

All these objects are solved by a method of fabricating a polymeric membrane having at least one pore with a diameter in the range below 500 nm, comprising the steps:
a) providing a substrate,
b) depositing a polymeric membrane on said substrate,
c) subjecting said polymeric membrane to a lithography step, thus introducing at least one pore with a diameter in the range below500 nm into said polymeric membrane, optionally an array of such pores,
d) lifting-off said membrane from said substrate.

In one embodiment step a) comprises the following substeps:
aa) providing a substrate having a surface, preferably a plane surface which substrate is made of a material selected from the group comprising oxides, metals and plastics,
ab) depositing on said surface of said substrate an anti-sticking layer, which anti-sticking layer has little adhesion to said surface of said substrate,
ac) depositing on said anti-sticking layer a carrier membrane, to which carrier membrane said anti-sticking layer has a greater adhesion than to said substrate,
ad) patterning said carrier membrane by introducing at least one recessinto it by a lithography step, said recesshaving a diameter in the range of from 1 µm to 500 µm into it

The term "plane surface", as used herein, is meant to characterize a surface which does not have substantial irregularities in it, such as elevations or cavities, that would interfere with the formation of a nanopore.

Preferably, step b) comprises the following substeps:
ba) depositing a polymeric membrane on said carrier membrane having said at least one recess, by a procedure selected from spin-coating and evaporating, such that said polymeric membrane covers said carrier membrane and, at the site of said at least one recess, forms a lining within said at least one recess,
and wherein step c) comprises the substep:
ca) performing said lithography step at said lining within said at least one recess.

In one embodiment said carrier membrane is made of an electrically insulating material selected from the group comprising polymers and oxides, wherein, preferably, it is made of a photoresist material. Typical examples of materials useful for producing said carrier membrane are chemically amplified resists and non-chemically amplified resists, that are sensitive to either light (IR, visible, UV) exposure, electron exposure, ion exposure or X-ray exposure; more specifically photoresists, like AZ resists, ZEP resists and others, deep-UV resists like UV 6/UV 5 and others, electron beam resists like poly(methyl(methacrylate)) (PMMA) and others; and resists used for nanoimprint lithography.

Preferably, said polymeric membrane is made of an electrically insulating material selected from the group comprising polymers and oxides, wherein, preferably, it is made of a resist material selected from photoresist materials and electron beam resist materials. Typical examples of materials useful for producing said polymeric membrane include polyethylene (PE), polyethylene terephthalate (PET), polyvinyl chloride (PVC), polycarbonate, pentacene and other plastic materials. In some embodiments, said polymeric membrane is a bilayer comprising a polymeric layer of one of the aforementioned materials and a layer of inorganic material, such as SiO₂, SiₓN_{y}, oxides, insulators and metals, or it is a multilayer of polymeric layers and inorganic layers in between. For example, a polymeric membrane according to the present invention may comprise a first polymeric layer, an inorganic layer on top thereof, and second polymeric layer on top of said inorganic layer, i.e. a sandwich structure. Possibly this structure may be repeated several times leading to a multiple sandwich structure of the layer sequence P₁I₁P₂I₂P₃I₃P₄I₄P₅ etc., with Pₓ and Iₓ denoting the x-th polymeric layer and inorganic layer respectively.

In one embodiment step d) occurs by application of force, such as suction, or by application onto said polymeric membrane of an adhesive tape having a hole (holes) so as not to cover said pore(s), and by subsequently lifting-off said polymeric membrane from said substrate.

In one embodiment said anti-sticking layer has a thickness in the range of from about 1 nm to about 100 nm, preferably about 5 nm to about 75 nm, more preferably about 10 nm to about 60 nm and most preferably about 20 nm to about 50 nm.

In one embodiment said anti-sticking layer is made of a material selected from the group comprising polymers, oxides, silanes, carbon (graphite), sputtered SiO₂ , SiₓN_{y}; preferably these materials are provided as nanoparticles. In one embodiment the anti-sticking layer is made of electrically conducting materials, in another embodiment it is made of electrically insulating material(s), in yet another embodiment it is made of a mixture of such material(s).

In a preferred embodiment said method comprises the additional step:
e) dissolving said anti-sticking layer in a suitable solvent, wherein, preferably, said anti-sticking layer is made of a material selected from the group comprising metals, oxides and plastics, and wherein, preferably, said suitable solvent is an aqueous basic solution (e.g. for metals), an aqueous KI/I₂-solution (e.g. for metals), water (e.g. for water soluble oxides), and an organic solvent (e.g. for plastics), such as acetone, alcohols, organic acids, wherein, preferably, steps d) and e) occur concomitantly.

In one embodiment said lithography step in step c) is selected from the group comprising optical lithography, electron beam lithography and atomic force microscope (AFM) lithography, and includes a developing step.

In one embodiment said lithography step in step ad) is selected from the group comprising optical lithography and electron beam lithography, and includes a developing step.

Preferably, steps ab) and ac) occur by a procedure selected from thermal evaporation electron-gun deposition, spin-coating, dip-coating, sputtering and vapour-phase deposition.

In one embodiment said developing step in ad) and ca) occurs by applying a developing solution to said carrier membrane and said polymeric membrane, respectively, preferably at the site where said recessand said pore is to be introduced, respectively, wherein, preferably, said anti-sticking layer is made of an electrically conducting material, preferably a metal, such as gold or aluminium, and wherein, more preferably, said introduction of said at least one pore having a diameter in the range below500 nm into said polymeric membrane in step c) is monitored by connecting an electrode with the developing solution and by connecting a counter-electrode with the anti-sticking layer, and wherein voltage and/or current variations are measured between said electrodes.

In one embodiment a constant DC voltage or current is applied via said electrodes and the current or voltage is monitored over time, wherein an increase in current and/or a decrease in voltage is indicative of completion of said introduction of the pore.

In another embodiment, AC current and/or voltage measurements are performed via said electrodes, using an impedance analyzer or lock-in-amplifier wherein such measurements afford a real and imaginary part of an impedance versus time-curve, and wherein the in-phase signal corresponds to the real part of the impedance and wherein an increase in current and/or a decrease in voltage is indicative of completion of said introduction of the pore, and wherein, furthermore the out-of-phase-signal corresponds to the imaginary part of the impedance versus time-curve and wherein, after completion of said introduction of the pore, the in-phase-signal and out-of-phase-signal reveal information about the size of the pore, said in-phase signal of the impedance reflecting the ohmic resistance of said pore in solution, thus reflecting the depth and the area size of said pore, said out-of-phase-signal of the impedance reflecting the capacitance of said pore.

The objects of the present invention are also solved by a membrane structure comprising a polymeric membrane on a carrier membrane, said polymeric membrane having at least one pore with a diameter in the range of below-500 nm, produced by the method according to the present invention.

Preferably, said pore has a diameter in the range of from 0.1 nm to 100 nm, preferably from 1 nm to 75 nm, more preferably 1 nm to 50 nm, and most preferably 1 nm to 10 nm.

In one embodiment, said polymeric membrane has a thickness in the range of from about 0.1 nm to about 500 nm, preferably from about 1 nm to about 250 nm.

Preferably, said carrier membrane has a thickness in the range of from about 1 µm to about 100 µm, preferably about 1 µm to about 50 µm, more preferably about 1 µm to about 20 µm, and most preferably about 10 µm.

In one embodiment, an array of n-times m pores has been introduced into a polymeric membrane using the method according to the present invention, n and m being positive integers, n and m may be the same or different positive integers. In one embodiment, a film heater is integrated into the polymeric membrane. This will allow for more accurate control during pore formation and also for further processing of the pore(s) after their/its formation.

The objects of the present invention are also solved by a use of a membrane structure according to the present invention in an electronic device, preferably for determining the size and/or sequence of a biopolymer, preferably of a protein or a nucleic acid, and/or as a counter for nanoparticles, proteins, nucleic acids or biological macromolecules.

The present inventors use a membrane that is based on a polymer material that can, for example, be spin-coated or evaporated or another comparable deposition method. Such method of spin-coating or evaporation is well known to someone skilled in the art. The polymeric material is deposited onto a flat surface, such as a silicon oxide surface of a silicon wafer which has a thin anti-sticking layer on top. Furthermore, on top of this anti-sticking layer, there may be another stabilizing polymeric layer, a so called "carrier layer" which serves the purpose of stabilizing the polymeric membrane. Onto the polymeric carrier layer, the desired polymeric layer is deposited, into which, subsequently pores in the nanometer range are introduced.

Such introduction of pores may be by way of lithography, preferably electron beam lithography, AFM lithography or optical lithography. After the pore(s) has (have) been introduced, the membrane structure, comprising the anti-sticking layer, the carrier layer and the polymeric membrane, can be lifted from the substrate simply by peeling it off using for example an adhesive tape with a centre hole, so as to avoid coverage of the pore. The pores according to the present invention within artificial polymeric membranes do not require any hard etching techniques, such as KOH etching which are otherwise required for the pores in SiO₂ or Si₃N₄₋membranes. Consequently, no hard masks having the capability to withstand KOH etching are required. Because such masks would have to be applied on both sides of the substrate, no high quality deposition methods are required in the method of the present invention. The pores according to the present invention are based on polymeric materials and therefore enable simple engineering approaches to control the final pore size. For example the pore can be manipulated by treatment with oxygen plasma, heating or cross-linking. The surface charge of the polymers can be varied within certain ranges and be easily made neutral which is a clear advantage over the negatively charged surface of oxide membranes, such as SiO₂ and Si₃N₄₋membranes. Surface charges are one of the sources of noise and the reason for a blocking of the pores. Moreover, polymer membranes are flexible and are therefore easy to integrate into a mechanical microfluidic environment. The present inventors' approach of using an anti-sticking layer and a polymeric carrier layer, preferably made of a photoresist, enables the integration of a large number of different membrane materials that can be deposited by evaporation, sputtering, spin-coating etc. Moreover, the feedback mechanism by monitoring the pore formation/pore introduction using two electrodes is straightforward and simple to realize. Hence, the present inventors do not need to rely on transmission electron microscopy or ion detection methods that were used in the prior art for such monitoring. The present inventors' approach allows the formation of very thin polymeric membranes based on a wide range of polymeric materials amenable to spin coating, evaporating or depositing from the vapour phase. Furthermore the membranes according to the present invention can be patterned by standard lithography methods. Also, the fact that membranes are fabricated on a substrate, with one layer, e.g. the anti-sticking layer on the substrate possibly functioning as an "integrated" back electrode enables to engineer the nanopore size for example through substrate heating and to monitor formation of the nanopore at the same time.

As used herein, a "pore with a diameter in the range below500 nm" is also sometimes referred to as a "nanopore". Preferably, such term "nanopore" more specifically refers to a pore having a diameter in the range of from 0.1 nm to 100 nm, more preferably from 1 nm to 75 nm, even more preferably from 1 nm to 50 nm and most preferably from 1 nm to 10 nm. The term "anti-sticking layer" as used herein is meant to describe a layer which, because of its low adhesion to a substrate, allows the peeling off of said anti-sticking layer, together with any additional layer on top of it, from said substrate. It is clear from the foregoing that said anti-sticking layer should only weakly adhere to the flat surface of a substrate, but it should have better adhesion properties to a layer attached to the anti-sticking layer on the other side. The exact choice of material of the anti-sticking layer therefore depends on the material of the substrate and can be determined by someone skilled in the art using his knowledge without undue experimentation. For example, someone skilled in the art knows that a layer of gold has very little adhesion to a silicon oxide surface. In general, the anti-sticking layer is made of a material selected from the group comprising metals, oxides, plastics or other organic components which show a weak adhesion to the material of which the substrate may be made. Useful examples of materials for the anti-sticking layer are gold, mica, carbon and fluorosilanes. In some embodiments, an anti-sticking effect is achieved by providing the material of the anti-sticking layer as nanoparticles. The substrate according to the present invention is made of a material selected from the group comprising oxides, metals, plastics or other organic components.

In a preferred embodiment of the method according to the present invention, a carrier membrane based on a suitable polymer, preferably a resist that can be patterned by optical lithography or electron beam lithography, is deposited on the anti-sticking layer (which itself is on a substrate). The patterning by optical or electron beam lithography results in a hole or recess within the carrier membrane, which hole or recess has a diameter in the micrometer range (1 µm - 500 µm). Onto such carrier membrane, the desired polymeric membrane is deposited, preferably by spin-coating or evaporating. Such deposition results in a thin polymeric layer on top of the carrier layer and in a lining of the aforementioned hole or recess within said carrier layer, thus effectively creating a thin polymeric layer also within the hole or recess, i.e. at the bottom and at the walls of the hole or recess. Thereafter, a further patterning occurs, namely the actual introduction of the nanopore into the polymeric membrane, preferably at the site, where the polymeric membrane forms a lining of the aforementioned hole or recess. Such patterning preferably occurs by optical lithography, electron beam lithography, AFM lithography or other methods known from the prior art, such as ion-beam lithography, x-ray lithography, and scanning tunnelling lithography, but also etching techniques if the polymeric membrane includes inorganic layers. Both the carrier membrane as well as the polymeric membrane should preferably be electrically insulating. The material of the carrier membrane is selected from the group comprising polymers and oxides, more preferably it is chosen from the group comprising photoresists. In a preferred embodiment, the material of the polymeric membrane is selected from the group comprising polymers and oxides in a more preferred embodiment, the material of the polymeric membrane is selected from the group comprising electron beam resists and photo resists. If the polymeric membrane comprises both polymeric layers and layers of inorganic material, it is clear to someone skilled in the art that for introducing the nanopore into the inorganic layer, one may have to use a different technique than for the polymeric layers. Whereas the aforementioned lithography steps are used for the polymeric layers, the inorganic layers may require etching techniques, such as ion etching, reactive ion etching, wet etching, and O₂-plasma etching.

The entire structure, comprising the anti-sticking layer, the carrier membrane and the polymeric membrane can be easily lifted of the substrate, for example by using an adhesive tape. After lifting/peeling, the anti-sticking layer can be removed by dissolution in an appropriate solvent. It is clear to someone skilled in the art which solvent to use, depending on the choice of materials that is used for the anti-sticking layer. For example, someone skilled in the art knows, that metals, like gold and aluminium can be dissolved in aqueous KI/I₂-solution (gold) or basic solutions (aluminium). Water-soluble oxides that are used for the anti-sticking layer require water. An organic anti-sticking layer may be removed by using an appropriate organic solvent, such as acetone, ethanol, DMF etc.

The entire structure, comprising anti-sticking layer, carrier membrane and polymeric membrane has a thickness of the anti-sticking layer in the range of from about 1 nm to about 100 nm, preferably about 5 nm to about 75 nm, more preferably about 10 nm to about 60 nm and even more preferably about 20 nm to about 50 nm. The thickness of the carrier membrane, preferably, is in the range of from about 1 µm to about 100 µm, preferably about 1 µm to about 50 µm, more preferably about 1 µm to about 20 µm and most preferably about 10 µm. The thickness of the polymeric membraneis in the range of from about 0.1 nm to about 500 nm, preferably from about 1 nm to about 250 nm. In some embodiments, the polymeric membrane may only have a thickness in the range of from 1 nm to 5 nm, preferably about 2 nm. Furthermore, the thickness of both the carrier membrane and the polymeric membrane can be varied, depending on the deposition time. In the case of spin-coating, parameters like rotational rate and the duration of spinning can be used to that extent. Furthermore post-processing steps may be used after the deposition steps, for example the use of oxygen plasma in order to remove layers of the polymeric membrane and/or the carrier membrane. In the case where the membranes are made of photoresist materials, the development time may be varied, as a result of which the membranes are developed to a different extent. For example, the "dark removal rate" is related to the parasitic development of resist areas that were not exposed.

In order to influence the diameter of the pores, various parameters may be influenced, such as exposure dose in the lithographic steps, subsequent processing steps such as a baking step after exposure, and the duration of the subsequent development. Furthermore, thermal annealing may be used to vary the pore diameter by heating the polymeric membrane to and above the glass transition temperature of the polymer. Additionally, the pore diameter may be varied by performing chemical and/or UV-induced crosslinking steps and/or by performing a plasma treatment step. In addition, the surface properties of the polymeric membrane can be changed by performing further treatments, such as thermal treatment, chemical treatment, light treatment, which vary the surface charge and the wettability of the polymer surface.

In addition thereto, the present invention provides for a feedback mechanism for monitoring, controlling and adjusting the diameter of the nanopores. The present inventors' idea is to measure the electrical resistance between a developer bath, i.e. a developing solution on one side of the pore, and the anti-sticking layer. Most developers solutions contain ions that can be used for electric transport measurements. Even developers based on organic solvents show a residual resistance or can be made conductive by the addition of a small amount of ions. Examples of developers are: tetramethylammoniumhydroxide (TMAH) for UV photoresists for optical lithography, methyl isobutyl ketone (MIBK) for poly(methyl methacrylate) (PMMA).

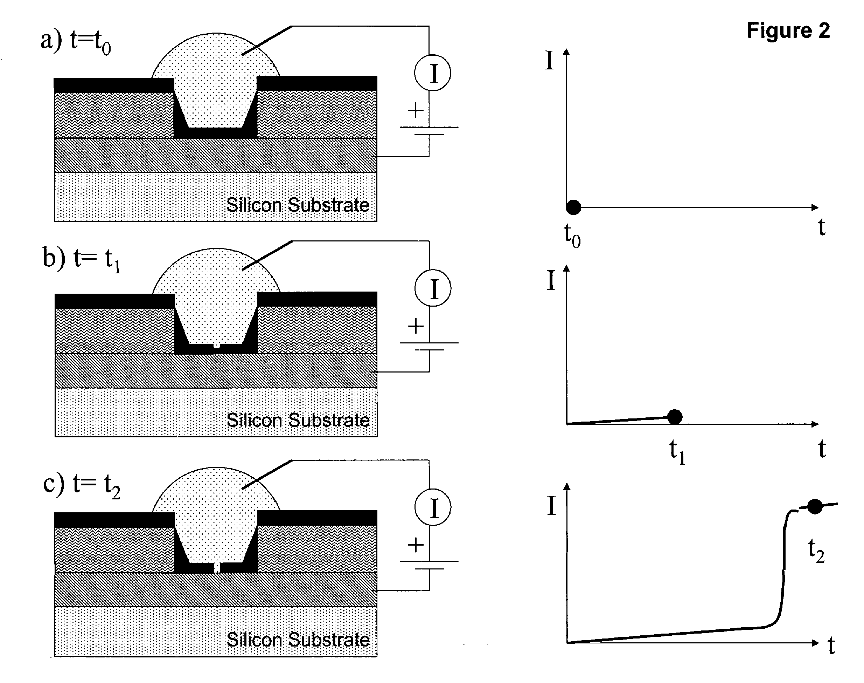

The schematic arrangement of one embodiment of the feedback mechanism for monitoring is shown in figure 2a. An electrode, preferably a chemically inert electrode is inserted into the developer solution, and a counter electrode is connected to the anti-sticking layer. The anti-sticking layer is electrically conducting in this case. Example are layers from gold, aluminium and others that can be wet-chemically etched. The electrical resistance between the developers solution and the conducting anti-sticking layer depends on the progress of developing. The reduction of the thickness of the polymeric membrane and the final break through (figure 2b and 2c, respectively) lead to a detectable electrical signal. Two types of measurements are possible:
1.) DC measurement of leakage current and break-through current
   A constant bias (either voltage or current) leads to a current or voltage variation, once the nanopore structure is developed (break through current and break through voltage drop, respectively). The derived electrical resistance will basically drop as the nanopore opens. Before the break-though, the reduction of the polymeric layer thickness might be detectable if a significant leakage current can flow. After the break-through, the level of the flowing current or voltage drop reveals information about the size of the nanopore.
2.) AC measurement to determine layer thickness reduction and break-through
   AC current and voltage measurements can be performed by using an impedance analyser or lock-in-amplifier. Such methods provide the real and imaginary part of the impedance versus time. The in-phase signal corresponds to the real part of the impedance and the information content is similar to that mentioned under 1.). The polymer membrane thickness reduction also results in a change of the capacitance between developer bath and the anti-sticking layer. This signal is measurable as the out-of-phase signal component. After the break-through, the in-phase and out-of-phase component reveal information about the size of the nanopore. The development time could be extended in order to reach a larger desired nanopore diameter.

This feedback approach leads to a direct control of the nanopore diameter during the developing process. This feedback approach can be also used to adjust the nanopore diameter as a post-development-adjustment after the developing step has been completed. Some methods were already listedabove. Shrinkage of the diameter through thermal annealing or other methods or diameter increase through oxygen plasma treatment or other methods can be monitored by measuring the current though or the voltage drop across the nanopore, using the anti-sticking layer as counter electrode. The fluidic medium does not need to be a developer in this case.

In the following, reference is made to the figures, wherein
**Figure 1** shows an embodiment of a process flow for fabricating nanopores using an anti-sticking layer and a supporting carrier membrane,
**Figure 2** shows an example of the setup and time-dependent monitoring of the developing process in order to open a nanopore in a resist membrane in a controlled way,
**Figure 3a** shows an embodiment of a process flow for fabricating a nanopore using a gold anti-sticking layer, a 10 µm thick SU-8 supporting membrane and a UV6.02 electron beam resist membrane,
Figure 3b shows an embodiment of a process flow for fabricating a nanopore using a polymeric membrane that is a bilayer or multilayer of polymer materials and inorganic materials, such as SiO₂, Six Ny,
**Figure 4** shows a SEM image of SU8/UV6.02 membrane system. The inset shows a 45 nm nanopore that was introduced into the UV6.02 resist by electron beam exposure.
Figure 5 shows the in-phase-current vs. time for the developing process of pores for different exposure times of the UV6-membrane and for different developer concentrations (TMAH = tetramethyl ammonium hydroxide.) The curves show a distinct rise of in-phase-current at the "break-through" of the pores with the in-phase-current being represented in arbitrary units with "µ" signifying x10⁻⁶.
**Figure 6** shows a SEM image of a poly(methyl methacrylate) system (molecular weight of 600 000 with a nanopore of a diameter of 10 nm. The present inventors envisage that nanopores of a diameter in the 1 nm range or even below (down to 0.1 nm) can be fabricated.

Furthermore, in the following reference is made to the following example 1, which is given to illustrate, not to limit the present invention.

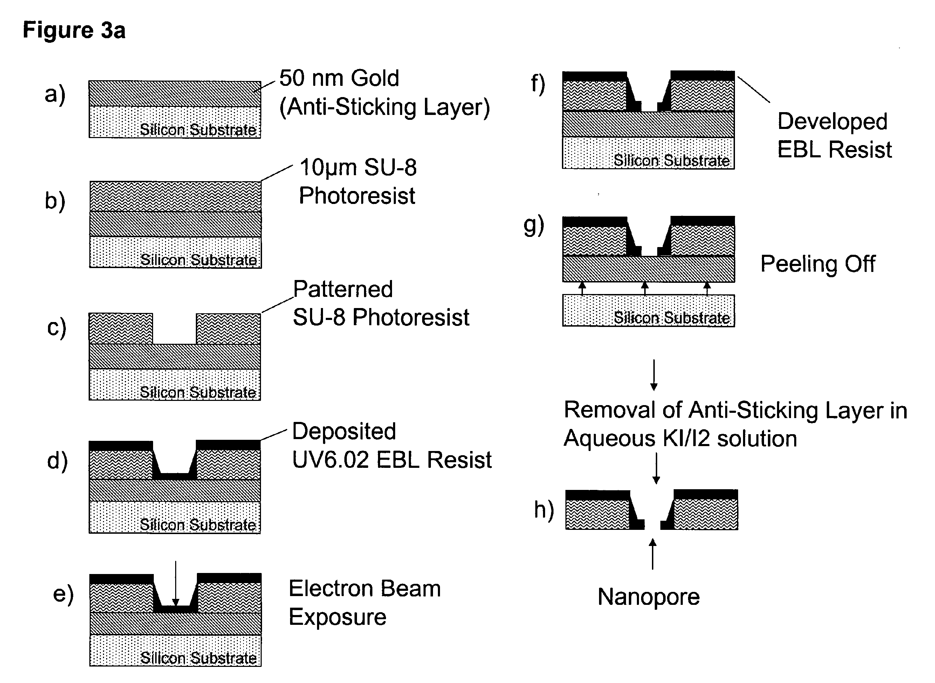

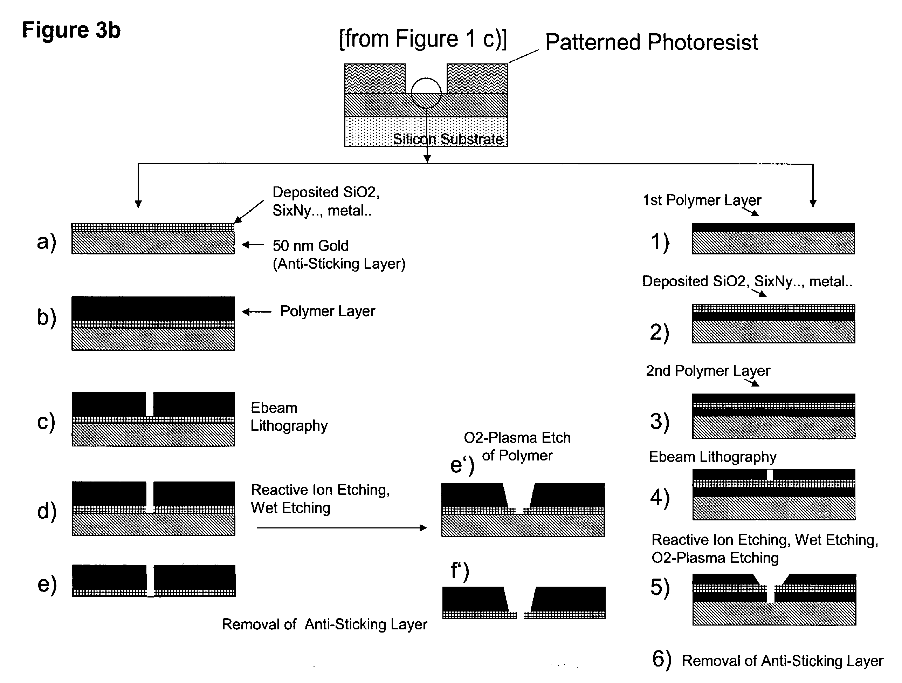

This example describes the fabrication of single nanopores in a membrane based on 200 nm thick UV6.02 (commercially available from Shipley Inc., USA) electron beam resist. The supporting membrane was based on 10 µm thick SU-8 photoresist (commercially available from Microresist GmbH, Berlin).
1. The anti-sticking layer was made of 50 nm thick gold that was sputter deposited onto a polished SiO₂ surface. **(Figure 3a).**
2. SU-8 photoresist was spin-coated onto the gold layer at 3000 rpm. The resulting thickness was about 10 µm. The resist was soft-baked at 65°C for 2 minutes and 95°C for 5 minutes. **(Figure 3b)**
3. A 60 µm wide hole or recess was exposed into the SU-8 resist layer at 360 nm for 20 seconds. The sample was postbaked at 65°C for 1 minute and 95°C for 2 minutes, and then developed in SU-8 developer for 2 minutes and rinsed in propanol. **(Figure 3c)**
4. UV6.02 (Shipley Inc.), was spin-coated onto the developed SU-8 sample at 4000 rpm. The resulting thickness of the resist layer was about 200 nm. The layer was soft-baked at 130°C for 60 seconds. (**Figure 3d**)
5. The UV6.02 resist layer was exposed with a single shot electron beam exposure at 10 kV, 18pA, and a dose of 125 µC/cm². (**Figure 3e**) The exposed sample was post baked at 130°C for 90 seconds and developed in MIF 726 metal-ion free developer for 45 seconds. A final rinse in DI (= de-ionised) water was applied. (**Figure 3f**)
6. The membrane layers were removed from the supporting substrate by peeling it off using an adhesive tape which had a hole in its center in order not to cover the nanopore. Peeling of the sputtered gold works very well because of the weak adhesion property of gold on silicon oxide. (**Figure 3g**)
7. The 50nm thick anti-sticking gold-layer was removed in aqueous KI/I₂ solution within 2 minutes. (**Figure 3h**)

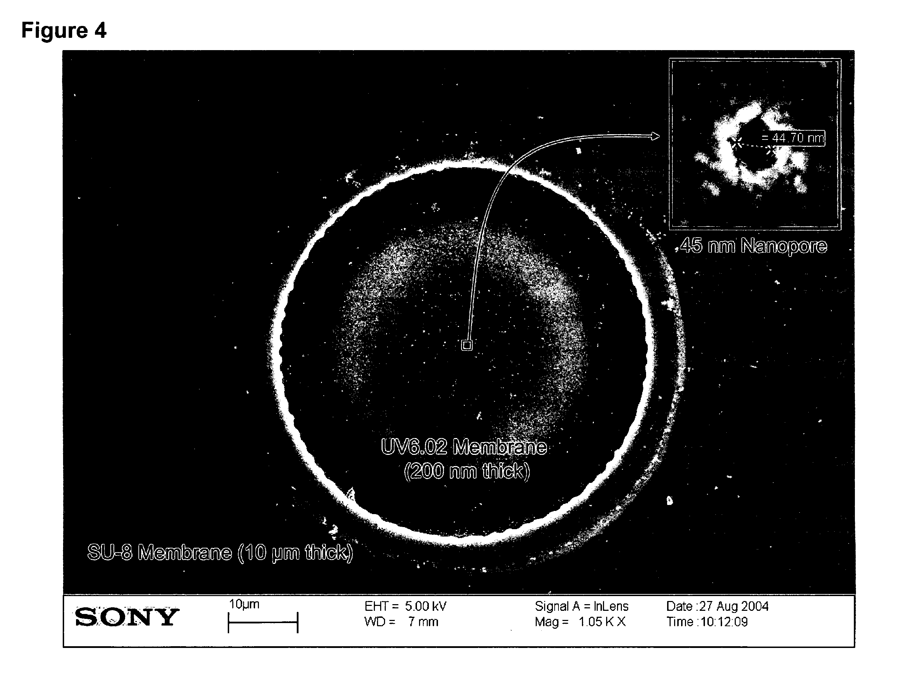

**Figure 4** shows an SEM image of the 60 µm hole or recess that was patterned into the SU-8 resist layer. The center of the hole holds the UV6.02 membrane and the nanopore. The inset in **Figure 4** displays a 45 nm nanopore introduced into the UV6.02 membrane by electron beam exposure. It is envisaged that nanopores in the single nanometer range or even sub-nanometer range (down to 0.1 nm) can thus be easily produced.

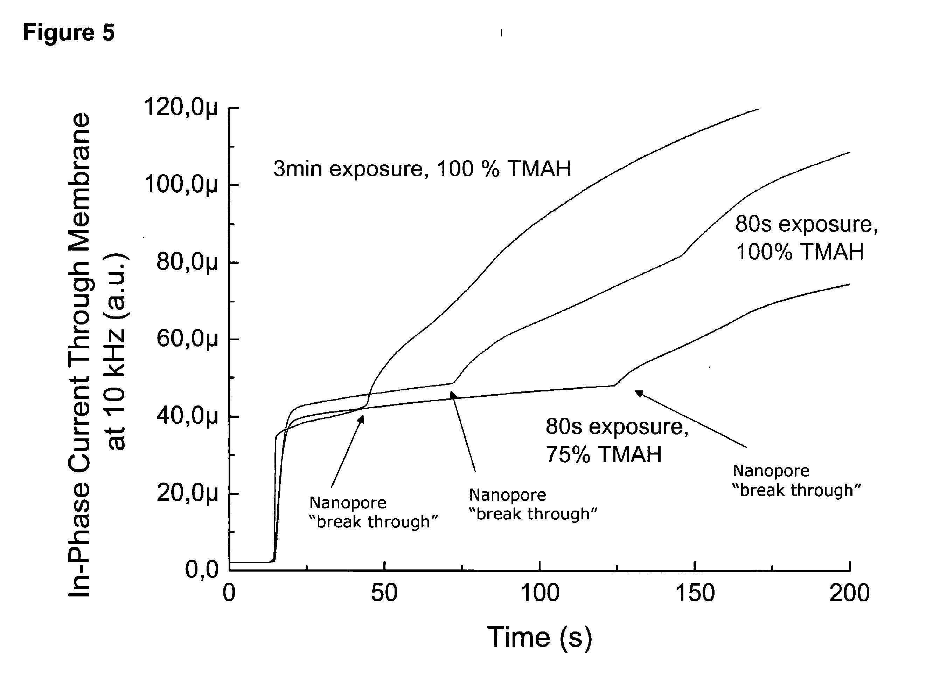

**Figure 5** shows the in-phase-current vs. time during pore formation according to the present invention.

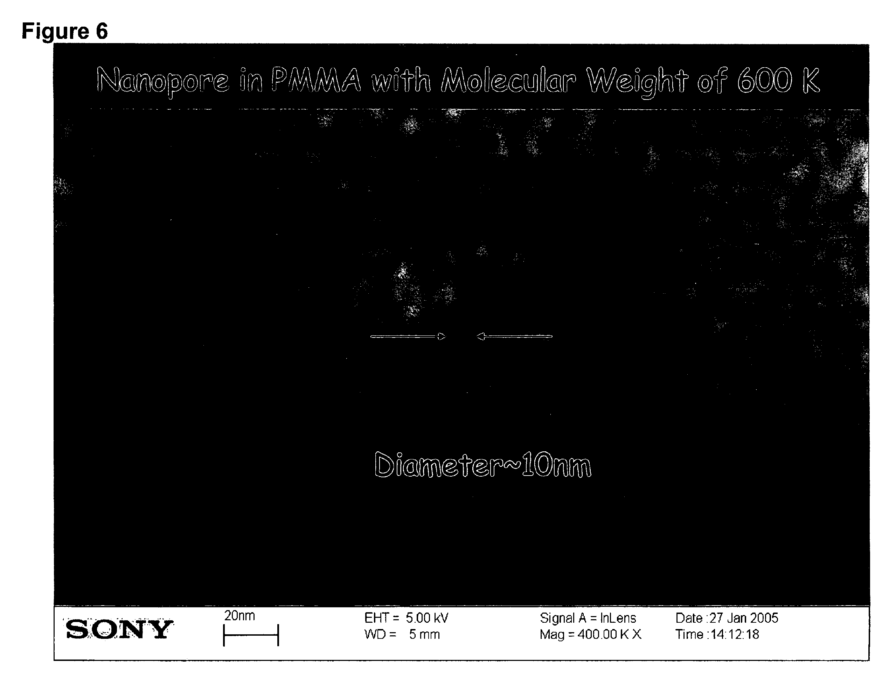

**Figure 6** shows a 10 nm diameter pore in a PMMA system according to the present invention.

In one embodiment, the polymer membrane mayalso consist of a bilayer or a multilayer of polymer materials and inorganic materials, e.g. SiO₂, SiₓN_{y}, any oxides, other insulators, and metals. The advantage of such structures is a larger mechanical stability of the membranes and the realisation of ultra-thin inorganic membranes with integrated nanopores. Figure 3b) shows possible sandwich structures.

The process flow on the left side of Figure 3b) describes how a polymer mask can be used to pattern a thin inorganic membrane layer. The inorganic membrane material canbe deposited by standard deposition methods like vacuum evaporation, sputtering, or spray/spincoating if applicable (Fig.3 b, a)). The thickness of the inorganic membrane layer should be similar to the thickness of the above-disclosed polymer membrane layers. The applied polymer layer (Fig. 3b, b)) can be patterned by a lithography step (Fig. 3b, c)), for example electron beam (ebeam) lithography,and depending on the inorganic material, the pattern (nanopore) can be extended into the inorganic material by for example reactive ion etching, ion etching, or wet etching (Fig. 3b, d)). In order to reduce the access resistance to the nanopore, 02-plasma etching can be applied to widen the access hole to the nanopore as shown in Fig. 3b, e'). Otherwise, the membrane structure is just completed by removing the anti-sticking layer as described above (Fig. 3b, e) und f')).

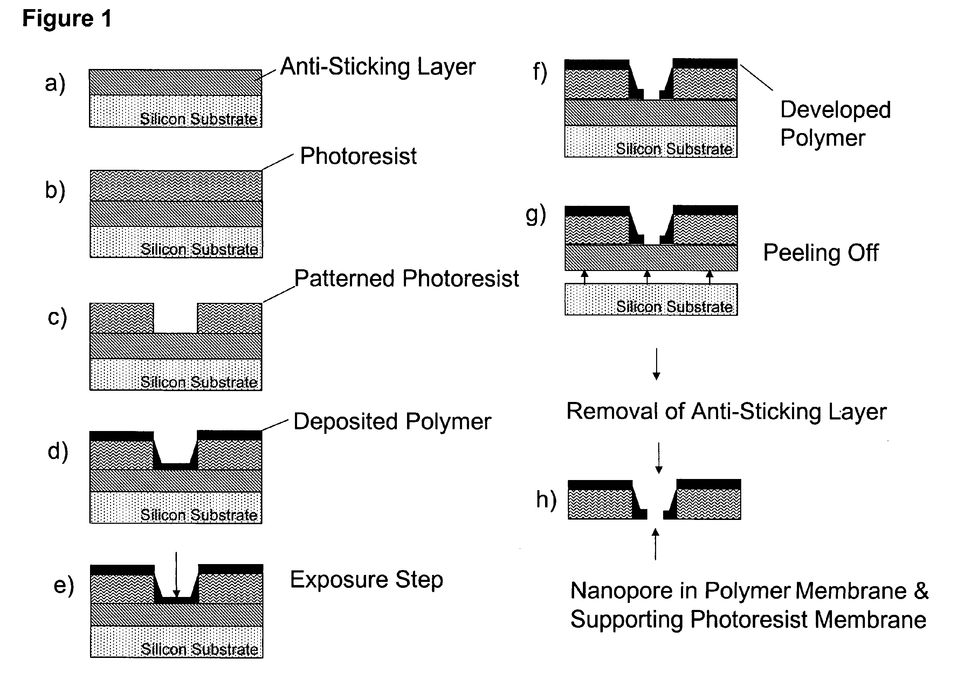

The process flow on the right side of Figure 3b) describes a slight variation of the just described process. In this case, an inorganic material layer is completely embedded between two polymer layers. Advantage of this approach might be a better protection of the thin inorganic material layer against chemical degradation, e.g. during the removal of the anti-sticking layer. Fig. 3b,1)) shows that the first polymer layer is deposited onto the anti-sticking layer. Then, the inorganic material layer is added (Fig. 3b, 2)), and finally, the second polymer layer is deposited (Fig 3b, 3)). Lithographic patterning is applied to the 2^{nd} polymer layer (Fig 3b, 4)). The pattern (e.g. nanopore) is then introduced into the inorganic material layer by means of reactive ion etching, ion etching, wet etching (Fig 3b, 5)). The pattern transfer into the 1^{st} polymer layer can be either performed by additional developing, or by 02 plasma etching (Fig 3b, 5)). Finally, the anti-sticking layer is removed to complete the membrane.

The features of the present invention disclosed in the specification, the claims and/or in the accompanying drawings, may, both separately, and in any combination thereof, be material for realising the invention in various forms thereof.

### References

ⁱ J. J. Kasianowicz et al., Proc. Natl. Acad. Sci. Vol. 93, pp. 13770-13773 (1996).
ⁱⁱ M. Akeson et al., Bio. Phys. J.,77 (1999) 3227-3233.
ⁱⁱⁱ M. Akeson et al., Patent WO0242496, 2000.
^{iv} A. Meller et al., Proc. Natl. Acad. Sci. 97 (2000)1079-1084.
^{v} S. Howorka et al., Nature Biotechnology 19 (2001) 636-639.
^{vi} W. Vercoutere et al., Nature Biotechnology 19 (2001) 248-252.
^{vii} J. Li et al. Nature 412 (2001) 166-169.
^{viii} D. Stein et al., Phys. Rev. Lett. 89 (2002) 276106-1
^{ix} J. Li et al. Nature Mater. 2 (2003) 611-615.
^{x} A. J. Storm et al., Nature Mater. 2 (2003) 537-540.
^{xi} P. Chen, Nano Lett. 4 (2004) 1333-1337.
^{xii} Z. Siwy et al., Europhys. Lett. 60 (2002) 349.
^{xiii} O. A. Saleh et al., Nano Lett. 3 (2003) 37-38.

## Claims

1. A method of fabricating a polymeric membrane having at least one pore with a diameter in the range below 500 nm, comprising the steps:
a) providing a substrate,
b) depositing a polymeric membrane on said substrate,
c) subjecting said polymeric membrane to a lithography step, thus introducing at least one pore with a diameter in the range below 500 nm into said polymeric membrane, optionally an array of such pores,
d) lifting-off said membrane from said substrate.

2. The method according to claim 1, wherein step a) comprises the following substeps:
aa) providing a substrate having a a surface, preferably a plane surface which substrate is made of a material selected from the group comprising oxides, metals and plastics,
ab) depositing on said surface of said substrate an anti-sticking layer, which anti-sticking layer has little adhesion to said surface of said substrate,
ac) depositing on said anti-sticking layer a carrier membrane, to which carrier membrane said anti-sticking layer has a greater adhesion than to said substrate,
ad) patterning said carrier membrane by introducing at least one recess into it by a lithography step, said recess having a diameter in the range of from 1 µm to 500 µm into it.

3. The method according to claim 2, wherein step b) comprises the following substeps:
ba) depositing a polymeric membrane on said carrier membrane having said at least one recess, by a procedure selected from spin-coating and evaporating, such that said polymeric membrane covers said carrier membrane and, at the site of said at least one recess, forms a lining within said at least one recess,
and wherein step c) comprises the substep:
ca) performing said lithography step at said lining within said at least one recess.

4. The method according to any of claims 2 - 3, wherein said carrier membrane is made of an electrically insulating material selected from the group comprising polymers and oxides, wherein, preferably, it is made of a photoresist material.

5. The method according to any of the foregoing claims, wherein said polymeric membrane is made of an electrically insulating material selected from the group comprising polymers and oxides, wherein, preferably, it is made of a resist material selected from photoresist materials and electron beam resist materials.

6. The method according to any of the foregoing claims, wherein step d) occurs by application of force, such as suction, or by application onto said polymeric membrane of an adhesive tape having a hole (holes) so as not to cover said pore(s), and by subsequently lifting-off said polymeric membrane from said substrate.

7. The method according to any of claims 2 - 6, wherein said anti-sticking layer has a thickness in the range of from about 1 nm to about 100 nm, preferably about 5 nm to about 75 nm, more preferably about 10 nm to about 60 nm and most preferably about 20 nm to about 50 nm.

8. The method according to any of the foregoing claims, wherein said polymeric membrane has a thickness in the range of from about 0.1 nm to about 500 nm, preferably from about 1 nm to about 250 nm.

9. The method according to any of claims 2-8, wherein said carrier membrane has a thickness in the range of from about 1 µm to about 100 µm, preferably about 1 µm to about 50 µm, more preferably about 1 µm to about 20 µm, and most preferably about 10 µm.

10. The method according to any of the foregoing claims, wherein said method comprises the additional step:
e) dissolving said anti-sticking layer in a suitable solvent, wherein, preferably, said anti-sticking layer is made of a material selected from the group comprising metals, oxides and plastics, and wherein, preferably, said suitable solvent is an aqueous basic solution (e.g. for metals), an aqueous KI/I₂-solution (e.g. for metals), water (e.g. for water soluble oxides), and an organic solvent (e.g. for plastics), such as acetone, alcohols, organic acids.

11. The method according to claim 10, wherein steps d) and e) occur concomitantly.

12. The method according to any of the foregoing claims, wherein said lithography step in step c) is selected from the group comprising optical lithography, electron beam lithography and atomic force microscope (AFM) lithography, and includes a developing step.

13. The method according to any of claims 2-12, wherein said lithography step in step ad) is selected from the group comprising optical lithography and electron beam lithography, and includes a developing step.

14. The method according to any of claims 2-13, wherein steps ab) and ac) occur by a procedure selected from thermal evaporation, electron-gun deposition, spin-coating, dip-coating, sputtering and vapour-phase deposition.

15. The method according to any of claims 12-14, wherein said developing step in ad) and ca) occurs by applying a developing solution to said carrier membrane and said polymeric membrane, respectively, preferably at the site where said recess and said pore is to be introduced, respectively.

16. The method according to claim 15, wherein said anti-sticking layer is made of an electrically conducting material, preferably a metal, such as gold or aluminium.

17. The method according to claim 16, wherein said introduction of said at least one pore having a diameter in the range below 500 nm into said polymeric membrane in step c) is monitored by connecting an electrode with the developing solution and by connecting a counter-electrode with the anti-sticking layer, and wherein voltage and/or current variations are measured between said electrodes.

18. The method according to claim 17, wherein a constant DC voltage or current is applied via said electrodes and the current or voltage is monitored over time, wherein an increase in current and/or a decrease in voltage is indicative of completion of said introduction of the pore.

19. The method according to claim 17, wherein, via said electrodes, AC current and/or voltage measurements are performed using an impedance analyzer or lock-in-amplifier wherein such measurements afford a real and imaginary part of an impedance versus time-curve, and wherein the in-phase signal corresponds to the real part of the impedance and wherein an increase in current and/or a decrease in voltage is indicative of completion of said introduction of the pore, and wherein, furthermore the out-of-phase-signal corresponds to the imaginary part of the impedance versus time-curve and wherein, after completion of said introduction of the pore, the in-phase-signal and out-of-phase-signal reveal information about the size of the pore, said in-phase signal of the impedance reflecting the ohmic resistance of said pore in solution, thus reflecting the depth and the area size of said pore, said out-of-phase signal of the impedance reflecting the capacitance of said pore.

20. A membrane structure comprising a polymeric membrane on a carrier membrane, said polymeric membrane having at least one pore with a diameter below 500 nm, produced by the method according to any of the foregoing claims.

21. The membrane structure according to claim 20, wherein said pore has a diameter in the range of from 0.1 nm to 100 nm, preferably from 1 nm to 75 nm, more preferably 1 nm to 50 nm, and most preferably 1 nm to 10 nm.

22. The membrane structure according to any of claims 20 - 21, wherein said polymeric membrane has a thickness in the range of from about 0.1 nm to about 500 nm, preferably from about 1 nm to about 250 nm.

23. The membrane structure according to any of claims 20-22, wherein said carrier membrane has a thickness in the range of from about 1 µm to about 100 µm, preferably about 1 µm to about 50 µm, more preferably about 1 µm to about 20 µm, and most preferably about 10 µm.

24. The membrane structure according to any of claims 20 - 23, wherein an array of n times m pores has been introduced by the method according to any of claims 1 - 19, n and m being positive integers.

25. The membrane structure according to any of claims 20 - 24, into which additionally a film heater is integrated.

26. Use of a membrane structure according to any of claims 20 - 25 in an electronic device, preferably for determining the size and/or sequence of a biopolymer, preferably of a protein or a nucleic acid, and/or as a counter for nanoparticles, proteins, nucleic acids or biological macromolecules.
